# EUROPÄISCHE PATENTSCHRIFT

(11) **EP 1 213 955 B1**
(45) Veröffentlichungstag und Bekanntmachung des Hinweises auf die Patenterteilung: **04.06.2003**
(21) Anmeldenummer: 00971307.4
(22) Anmeldetag: 25.09.2000
(51) Int. Cl.: A01G 31/02

(54) **RINNEN FÜR PFLANZENZUCHT**
CHANNELS FOR PLANT BREEDING
GOUTTIERE DE CULTURE DE PLANTES

(30) Priorität: 24.09.1999 DE 29920272 U
(43) Veröffentlichungstag der Anmeldung: 19.06.2002
(73) Patentinhaber: Metazet B.V., 2291 PD Wateringen (NL); Van Adrichem, Leonardus Gerardus, 2295 LS Kwintsheul (NL)
(72) Erfinder: VAN ADRICHEM, Leonardus, Gerardus, NL-2295 LS Kwintsheul (NL)
(74) Vertreter: Merkelbach, B.
(86) Internationale Anmeldenummer: EP0009582
(87) Internationale Veröffentlichungsnummer: WO01022800

(56) Entgegenhaltungen:
- EP-A- 0 210 702
- EP-A- 0 301 619
- NL-C- 1 006 295
- US-A- 5 409 510

## Beschreibung

Die Erfindung betrifft ein neues Pflanzenzuchtsystem, das zum Ausdruck gebracht wird in Form einer neuen Pflanzenzuchtrinne zur Anwendung in der Gewächshauskultur, um Nährbodenmatten und/oder Pflanzenzuchtkästen aufzulegen.

Bei einer traditionellen Pflanzenzuchtrinne (siche z.B. NL-C-1006295) ist eine passende Nährbodenmatte in einer Rinne mit erhöhtem Bodenteil positioniert. An beiden Seiten von dem erhöhten zentralen Bodenteil befinden sich dann niedrige längere Wasserabflusskanäle. Da die Rinne unter der Nährbodenmatte abgeschlossen ist und deshalb dunkel ist, können immer Wurzeln anwachsen. Die Pflanzenwurzeln bahnen sich dann einen Weg durch die Drainlöcher in der Kunststoffolie, die die Nährbodenmatte umschliesst, und die Pflanzenwurzeln dringen so bis zu den Wasserabflusskanälen durch. Die Oberfläche der Nährbodenmatte auf der erhöhten zentralen Rinnenboden beträgt dabei nur ungefähr 70% von der gesamten verfügbaren Rinnenbreite. Da die Nährbodenmatte über ihre gesamte Länge nicht regelmäßig hochgehoben werden kann, um den unerwünschten Wurzelanwachs zu kontrollieren und eventuell wegzuschneiden, entsteht unter der Nährbodenmatte im Dunkeln und aus den Drainlöcher ein ungehemmt kräftiger Pflanzenwurzelanwuchs, der für die Kultur schädlich ist und der auch eine hinderliche Verstopfung der Wasserabflusskanäle herbeiführt. Wenn die Pflanzenzuchtrinne "schräg" gelegt wird, dann gibt es keine nützliche Wirkung mehr gegen den Wurzelwuchs, wenn die Wasserabflusskanäle verstopft sind.

Die Erfindung bezweckt, mit einem neuen Zuchtsystem eine neue Pflanzenzuchtrinne zu schaffen, mit dem es möglich ist, einem ungehemmten Wurzelanwuchs vorzubeugen, wobei im übrigen die Wasserabflussmöglichkeit unvermindert bestehen bleibt.

Erfindungsgemäss wird in einem Querschnitt der zentrale Bodenteil einer Rinne dermassen erhöht, daß der erhöhte Boden weiter ausragt über die so sehr viel tiefer gelegenen Wasserabflusskanäle. Während bei der traditionelle Zuchtrinnne nur 70% von der Nährbodenmatte auf dem erhöhten Bodenteil ruht, wird bei der neuen Pflanzenzuchtrinne die Nährbodenmatte über ihre Gesamtbreite durch das stark erhöhte Bodenteil gestützt. Die Drainlöcher in der Kunststoffolie liegen so genau auf dem Rinnenboden und geben keinen einzigen Zugang zu den anwesenden Wasserabflusskanälen mehr frei.

Der große Vorteil dieser Ausbildung der neuen Zuchtrinnne ist auch, daß durch die Drainlöcher als Folge der Anwesenheit von einem das Wurzelwachsen bremsenden "Lichtbrücke-Abstand" zwischen der höchsten Oberfläche und dem untersten Wasserabflusskanal über eine Höhe der Seitenflächen von z.B. 8 cm kein Wurzelanwuchs mehr auftreten kann. Pflanzenwurzeln können somit nicht mehr zu einer hinderlichen Verstopfung der Wasserabflusskanäle führen, wodurch die Pflegetätigkeit auf ein Minimum reduziert wird.

Der stark erhöhte Bodenteil der neuen Rinne kann im Prinzip im Querschnitt flach sein, er kann aber auch z.B. der Mitte heraus nach beiden Seiten unter einem geringen Winkel schräg weggehen. Es ist auch möglich, um in dem erhöhten Bodenteil eine geringe Krümmung des Profils vorzusehen, in dem erhöhten Bodenteil einen Kurvenradius von z.B. 60-75mm auszubilden.

In einer traditionellen Zuchtrinne wobei die Nährbodenmatten immer miteinander in demselben Abflusswasser liegen, entsteht leicht die Unvermeidlichkeit daß durch die Drainlöcher in der Kunststofffolie eine unerwünschte Virusübertragung von der einen Nährbodenmatte zu der anderen auftritt. Das Virusübertragungrisiko wird mit dem neuen Zuchtsystem bzw. mit der neuen Pflanzenzuchtrinne vollständig verhütet. Die Nährbodenmatten haben jetzt durch die Wasserabflusskanäle keine gegenseitige Verbindung mehr.

Ein anderer Vorteil dieses neuen Zuchtsystems ist, daß die Wasserabflusskanäle einfach und direkt unter Kontrolle stehen bezüglich des Vorhandenseins von Verstopfungen, so daß keine Störungen in dem Drainwasserauslass mehr auftreten können.

Dieses neue Rinnenprofil ermöglicht außerdem das Ausbilden größerer Überspannungen dadurch, daß das Rinnenprofil faktisch als ein U-Profil betrachtet werden kann, das in dieser Position den größten Widerstand gegen Durchbiegung aufweist, so daß im Prinzip eine geringere Anzahl Aufhängpunkte in der Zucht anwesend ist.

In der Mitte des Pflanzenzuchtprofils kann noch eine zentrale vertiefte Rille vorgesehen werden, durch die eine bleibende gute zentrale Positionierung der Nährbodenmatte auf dem Bodenteil erhalten bleibt, welche schon dadurch gewährleistet ist, daß die gesamte Grundoberfläche der Nährbodenmatte auf der gesamten Bodenoberfläche der neuen Pflanzenzuchtrinne ruht. Dadurch wird ermöglicht, daß die Unterseite der Umschließung aus Kunststoffolie der Nährbodenmatte in die Rille leicht durchsacken kann, wodurch eine seitliche Verschiebung durch Anstossen der Nährbodenmatte auf Reibungswiderstand stosst.

In der Gewächshauskultur kann weiterhin doch noch einfach Pflanzenzuchtabfall b.z.w. Schmutz in die Wasserabflusskanäle geraten und diese verstopfen. Um diesem Symptom entgegenzutreten, können die aufstehenden Ränder der Wasserabflusskanäle jeweils in Richtung der hochstehenden Innenseite gebogen werden. Dadurch wird der Durchfallschlitz für Schmutz so verkleinert, daß eine Kontrolle doch noch möglich bleibt.

EP-A-301619 veröffentlicht ein Verfahren zur Kontinuierlichen Herstellung von Pflanzenzuchtrinnen.

Die Erfindung betrifft auch noch ein Verfahren für die kontinuierliche Herstellung von solchen neuen Zuchtrinnen für die Gewachshauskultur über große Längen wozu eine mobile sogenannte Rollformmaschine jetzt mit einer Anzahl Walzrottensätze versehen wird, in einem Gewächshaus aufgestellt wird und dann mit Hilfe dieser Maschine große Längen der neuen Pflanzenzuchtrinnen von 100 Meter oder mehr auf einmal gerollformt und danach gleichzeitig aufgehängt werden an dafür geeigneten Aufhängelementen. Als Folge der Profilform entstehen jetzt auch weniger Probleme und das Durchknicken von Pflanzenzuchtrinnen, die noch nicht aufhängt sind, wird weniger häufig stattfinden.
Die Erfindung wird hiemach mit Hilfe der Zeichnung an Hand einiger Ausführungbeispiele erläutert.

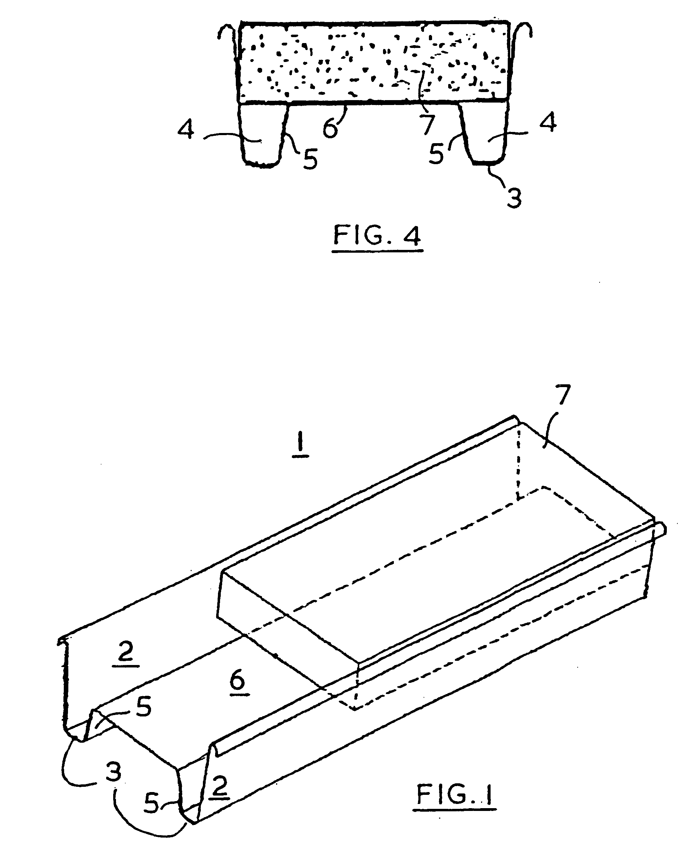

Fig. 1 zeigt eine perspektivische Ansicht einer traditionellen Pflanzenzuchtrinne;
Fig. 2 zeigt eine perspektivische Ansicht von einer neuen Pflanzenzuchtrinne;
Fig. 3 zeigt eine Seitenansicht der Pflanzenzuchtrinne gemäß Fig. 2 mit Nährbodenmatte;
Fig. 4 zeigt in Seitenansicht die Auflage einer Nährbodenmatte auf einer traditionellen Pflanzenzuchtrinne;
Fig. 5 zeigt in perspektivischer Ansicht die neue Pflanzenzuchtrinne mit Längsrille;
Fig. 6 zeigt bei einer neuen Pflanzenzuchtrinne die aufstehenden Pflanzenzuchtrinnenränder, die innenwarts gerichtet sind.

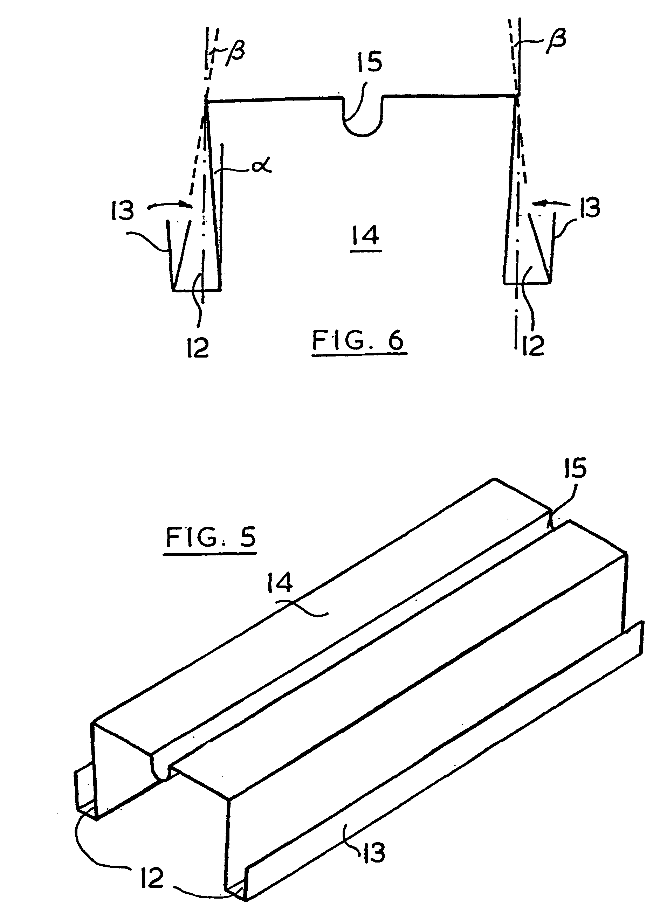

Das Pflanzenzuchtverfahren mit Hilfe einer traditionellen Pflanzenzuchtrinne 1 besteht darin, daß eine Pflanzenzuchtrinne profiliert ist mit zwei gegenüberstehenden senkrechten Seitenwänden 2, die je nach unten übergehen in den Boden 3 eines Wasserabflusskanals oder einer Drain 4, die geformt werden von den Kanalwänden 5, die in den Boden 6 der Rinne hochgehen. Die Nährbodenmatte 7 mit einer Breite, die zwischen die nach oben ausragenden Seitenwände 2 der Rinne 1 passt, wird auf den Boden 6 der Rinne 1 aufgelegt und ist in diesem Stand ersichtlich in Fig. 4.

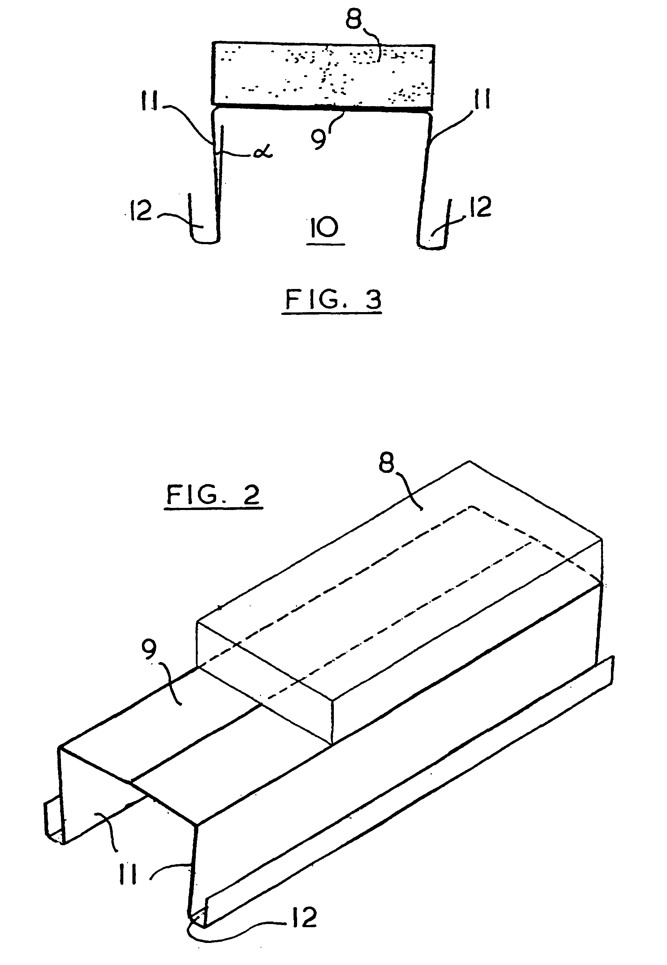

Es ist klar, daß die Pflanzenwurzeln durch die Nährbodenmatte 7 durch die Drainlöcher (nicht gezeichnet) zum Boden 3 des Wasserabflusskanals 4 durchdringen können und da den Wasserabfluss verstopfen können. Das Auftreten von diesem unerwünschten Wurzelanwuchs wird kaum zu bemerken sein, weil die Nährenbodenmatte 7 die Pflanzenzuchtrinne als ein engschliessender Deckel abschließt und im entstehenden Dunkeln der Wurzelanwuchs leider unbeschränkt zunehmen wird durch den anwesenden Wasserzufluss.
In Gegensatz dazu zeigt Fig.2 die neue Pflanzenzuchtrinne mit dem neuen Verfahren. Die Nährbodenmatte 8 ist nun unmittelbar oben auf dem obersten Teil 9 der Pflanzenzuchtrinne 10 aufgelegt und von diesem obersten Teil 9 strecken sich die Seitenwände 11 beidseitig nach unten aus und gehen hinüber in Wasserabflusskanäle 12.

Zwischen der Unterseite der Nährbodenmatte 8 und dem Boden des Wasserabflusskanals 12 ist ein solcher Abstand, z.B. von 8 cm ausgebildet, der vorbeugt, daß ein Wurzelanwuchs mittels den Drainlöcher in der Nährbodenmatte 8 nach dem darunter gelegenen Wasserabflußkanal 12 zustande kommt. Der Drainwasserabfluss wird durch diese neue Auflagerung der Nährbodenmatte 8 äußerst effektiv stattfinden.
Jedoch würde durch den immer anwesenden Pflanzenabfall eine Verschmutzung der nach oben hin offenenen Wasserabflusskanäle stattfinden können. Einer solchen Verschmutzung wird dadurch vorgebeugt, daB, wie Fig.6 in Seitenansicht zeigt, die hochstehenden Aussenwandteile 13 der Wasserabflusskanäle 12 innenwärts umgebogen sind.

In Fig. 5-6 ist eine Pflanzenzuchtrinne 14 gezeichnet, deren Oberfläche für die Nährbodenmatte mit einer Rille 15 versehen ist, z.B. mit einer Breite von 2 cm und einem Radius von 1 cm. Diese Längsrille 15 kann dazu dienen, die Nährbodenmatte an ihrer Stelle zu positionieren. Die oberste Lagerungsfläche der neuen Zuchtrinne kann flach sein, versehen mit einer Rille, leicht konvex sein oder von einer zentralen Mittellinie hinaus beidseitig unter einem geringen Winkel herab laufen. Dabei soll mit der gewünschten Biegungstärke des Zuchtrinnenprofils, das über eine sehr grosse Länge von Hängestützorganen getragen wird, Rechnung getragen werden.

Es ist ausreichend für diese Hängestützelemente, daß sie hakenförmig ausgestaltet sind, um an den Wasserabflusskanälen angreifen zu können und diese Art der Aufhängung an den gewählten Zuchtrinnenprofilen nach den Fig. 2 und 5 gibt bereits genügend Festigkeit

Es spricht für sich, daß ohne Abweichung vom Prinzip der Erfindung die Profilierung des Zuchtrinnenprofils noch einer Änderung unterliegen kann. Eventuelle Wünsche können darin ausgeführt werden, wenn man mit der Gestaltung der Formrollensätze Rechnung trägt.

Man kann auch wünschen, Festigkeitsrillen anzubringen, so daß die Anwendung von dünnerem Bandmaterial den Widerstand gegen Durchbiegung des Zuchtrinnnenprofils erhöht.

Werden die Beine an dem Zuchtrinnenprofil etwa schräg ausgeführt, ist es auch möglich, die Zuchtrinnenproflle einfach aufzustapeln (einzunesten). Außerdem können noch andere Maßnahmen an dem Zuchtrinnenprofil dadurch getroffen werden, daß Aussparungen in den Seitenwänden versehen werden.
Einerseits kann bezweckt werden, die Aufhängung zu ermöglichen und anderseits eine Materialeinsparung, also eine Gewichtseinsparung beim Aufhangen der Zuchtrinne zu bewerkstelligen.

Die Zuchtrinnenprofile, die hier beschrieben sind, können nach Wunsch ausgeführt werden in galvanisiertem Stahl, verzinkt sein oder in einer lackierten oder kunststoffbeschichteten Ausführung.

## Patentansprüche

1. Pflanzenzuchtrinne zur Anwendung bei einem neuen Zuchtsystem, wobei das U-formige Pflanzenzuchtrinnenprofil (10) , das über seine ganze Länge durch Aufhangeelemente unterstützt wird, im wesentlichen besteht aus einer obersten Oberfläche (9), die in der Breite nahezu übereinstimmt mit der Breite einer darauf zu positionierenden Nährbodenmatte (8) und wobei die Beine des U's von der Oberfläche ab beidseitig herunterweisend sind über einen erheblichen Abstand, der sogenannte Lichtbrückeabstand, der größer ist als oder zumindest gleich ist der Höhe der Nährbodenmatte (8) , wobei die freien Enden der Beine (11) derartig über eine geringen Höhe nach Außen nach oben hinauf umgesetzt sind, dass jeder einen Wasserabflusskanal oder Drain (12) bildet.

2. Pflanzenzuchtrinne nach Schutzanspruch 1, **dadurch gekennzeichnet, dass** bei dem U-formigen Profil der Pflanzenzuchtrinne das Verhältnis zwischen der Breite der Oberfläche (9) fur die Nährbodenmatte (8) und dem Abstand von dem Boden der Oberfläche (9) von der Nährbodenmatte (8) bis zu dem Boden des Wasserabflusskanals oder Drains (12) grösser ist als oder höchstens gleich 1 ist.

3. Pflanzenzuchtrinne nach Schutzanspruch 2, **dadurch gekennzeichnet**, das der Wasserabflusskanal oder der Drain (12) aussenseitig dauernd sichtbar bleibt und dann auch Einfach kontrollierbar ist, um eventuellen Verstopfungen des Wasserabflusskanals vorzubeugen.

4. Pflanzenzuchtrinne nach Anspruch 3, **dadurch gekennzeichnet, dass** bei dem Profil der Pflanzenzuchtrinne beide Beine des U's unter einem geringen Winkel zueinander hingebogen sind.

5. Pflanzenzuchtrinne nach Schutzanspruch 3, **dadurch gekennzeichnet, dass** bei dem Profil der Pflanzenzuchtrinne die beide Beine des U's unter einem geringen Winkel β auseinander gebogen sind, derart, dass zwei U-formige Pflanzenzuchtprofile (10) ineinander nesten Können.

6. Pflanzenzuchtrinne nach einem der vorgehenden Schutzansprüche 1-5, **dadurch gekennzeichnet, dass** die Oberflache des Rinneprofils zumindest mit einer Aussparung (15) versehen ist, um die seitliche Position der Nahrbodenmatte zu fixieren.

7. Pflanzenzuchtrinne nach einem der vorgehenden Schutzansprüche 1-6, **dadurch gekennzeichnet, dass** jeder aufstehende Rand der Rinnenprofils (10), der die Aussenseite des Wasserabflusskanals oder der Drain (12) bildet, in solcher Weise nach dem Bein des U's hingebogen ist, dass nur ein geringner Abstand zwischen dem Rand und dem Bein übrigbleibt, um dem Einfall von Pflanzenabfall vorzubeugen.

8. Verfahren zur kontinuierlichen Herstellung mittels einer Rollformmaschine von Pflanzenzuchtrinnen nach einer der vorgehenden Ansprüchen 1-7, wobei eine Rollformmaschine ausgerüstet wird mit mehreren Walzrollensätzen die insgesamt, in einem Querschnitt, ein U-förmiges Profil bilden, derart dass der Boden des U's hochsteht und beidseitig des Bodens die Beine über eine bestimmte Höhe nach unten weisen, zum niederrieseln des Wassers, und weiter übergehen in einem kleineren Wasserrinneprofil worin das niedergerieselte Wasser aufgefangen werden kann derart dass die gerollformte Randverformung der beiden Wasserrinnenprofile gleichzeitig die erforderliche Rinnenprofil-Festigkeit bietet zum Aufhängen der Pflanzenzuchtrinne.

9. Verfahren nach Anspruch 8, unter Anwendung von lackiertes Metallbandmaterial das beidseitig beschichtet ist.

10. Verfahren nach Anspruch 9, wobei die Beschichtung an der Aussenseite der Pflanzenzuchtrinne von einem Plastisol-Lackierung gebildet wird.

## Claims

1. Plant troughs for use in a new cultivation system, in which the U profile (10) of the trough, which is held up by suspension elements all along its length, is made up largely of an upper surface (9), the size of which coincides almost with the width of a nutrition mat (8) designed to be positioned on it, and in which the branches of the U diverge from the surface, towards the base, on both sides, for a considerable distance, which is called the distance apart, which is larger or at least equal to the depth of the nutrition mat (8), the free ends of the branches (11) being bent down towards the outside and then slightly upwards so that each of them forms an evacuation channel for water or drain (12).

2. Plant trough according to Claim 1, **characterised in that** in the U profile of the plant trough, the relationship between the width of the surface (9) for the nutrition mat and the distance between the bottom of the surface (9) of the nutrition mat (8) and the bottom of the water evacuation channel or drain (12) is larger than or at maximum equal to 1.

3. Plant trough according to Claim 2, **characterised in that** the water evacuation channel or drain (12) is visible permanently on the outside and thus also allows a simple check for any possible blockages in the water evacuation channel.

4. Plant trough according to Claim 3, **characterised in that**; in the profile of the plant trough, the two sides of the U lean toward each other at a slight angle.

5. Plant trough according to Claim 3, **characterised in that** in the profile of the plant trough the two branches of the U deviate one from the other at the angle β so that the two U form plant trough profiles of plant culture (10) can lodge one in the other.

6. Plant trough according to any one of the claims 1 to 5, **characterised in that** the surface of the profile of the trough has at least one groove (15) to fix the lateral position of the nutrition mat.

7. Plant trough according to any of the claims 1 to 6 **characterised in that** each upright side of the profile of the trough (10), which form the outer side of the water evacuation channel or drain (12) is bent towards the branch of the U in such a way that there remains only a small gap between it and the side, to prevent entry of plant waste.

8. A continuous manufacturing method for plant troughs, according to any of the claims 1 to 7, using a roller- equipped profiling machine, in which a profiling machine is equipped with several sets of rollers which together form, in cross-section, a U shaped profile in which the bottom of the U is towards the top and at the bottom of the two sides the branches extend downwards for a certain distance, to allow water to run away, and also get thinner to form a narrower drainage profile in which the water which has run away can be collected, so that the deformation of the edges of the two drainage profiles made by the rollers also offers the necessary resistance to the trough profiles to suspend the plant trough.

9. Process according to claim 8 but using a painted metallic material, which is coated on both sides.

10. Procedure according to claim 9, in which the coating is formed on the outside of the plant trough with a plastisol paint.

## Revendications

1. Bac de culture de plantes pour application dans un nouveau système de culture, dans lequel le profil en U (10) du bac de culture de plantes, qui est soutenu par des éléments de suspension sur toute sa longueur, est constitué sensiblement d'une surface supérieure (9), dont la largeur coïncide presque avec la largeur d'un mat de milieu nutritif (8) destiné à être positionné sur elle, et dans lequel les branches du U s'écartent de la surface, vers le bas, des deux côtés, sur une distance considérable, ce que l'on appelle la distance d'écartement, qui est supérieure ou au moins égale à la hauteur du mat de milieu nutritif (8), les extrémités libres des branches (11) étant retournées vers l'extérieur et vers le haut sur une faible hauteur de sorte que chacune d'entre elles forme un canal d'évacuation d'eau ou drain (12).

2. Bac de culture de plantes selon la revendication 1, **caractérisé en ce que**, dans le profil en forme de U du bac de culture de plantes, le rapport entre la largeur de la surface (9) pour le mat de milieu nutritif (8) et la distance entre le fond de la surface (9) du mat de milieu nutritif (8) et le fond du canal d'évacuation d'eau ou drain (12) est supérieur ou au maximum égal à 1.

3. Bac de culture de plantes selon la revendication 2, **caractérisé en ce que** le canal d'évacuation d'eau ou drain (12) reste visible en permanence côté extérieur et permet donc aussi simplement de vérifier s'il y a des obturations éventuelles du canal d'évacuation d'eau.

4. Bac de culture de plantes selon la revendication 3, **caractérisé en ce que**, dans le profil du bac de culture de plantes, les deux branches du U se rapprochent l'une de l'autre selon un petit angle.

5. Bac de culture de plantes selon la revendication 3, **caractérisé en ce que**, dans le profil du bac de culture de plantes, les deux branches du U s'écartent l'une de l'autre selon un petit angle β de sorte que deux profils de culture de plantes (10) en forme de U puissent se loger l'un dans l'autre.

6. Bac de culture de plantes selon l'une quelconque des revendications 1 à 5, **caractérisé en ce que** la surface du profil du bac est pourvue d'au moins un évidement (15) pour fixer la position latérale du mat de milieu nutritif.

7. Bac de culture de plantes selon l'une quelconque des revendications 1 à 6, **caractérisé en ce que** chaque bord dressé du profil (10) du bac, qui forme le côté extérieur du canal d'écoulement d'eau ou drain (12), est replié vers la branche du U de sorte qu'il reste seulement une faible distance entre le bord et la branche pour prévenir l'entrée de déchets de plante.

8. Procédé de fabrication en continu au moyen d'une machine de profilage à galets de bacs de culture de plantes selon l'une quelconque des revendications 1 à 7, dans lequel une machine de profilage à galets est équipée de plusieurs jeux de galets qui forment conjointement, en coupe transversale, un profil en U, de sorte que le fond du U soit tourné vers le haut et que, des deux côtés du fond, les branches s'étendent vers le bas sur une certaine hauteur, pour le ruissellement de l'eau, et se fondent en outre en profil d'évacuation d'eau plus petit, dans lequel l'eau qui a ruisselé peut être collectée de manière que la déformation des bords des deux profils d'évacuation d'eau profilés par les galets offre simultanément la résistance nécessaire aux profils du bac pour suspendre le bac de culture de plantes.

9. Procédé selon la revendication 8 en mettant en oeuvre un matériau en bande métallique verni, qui est revêtu des deux côtés.

10. Procédé selon la revendication 9, dans lequel le revêtement est formé sur la face externe du bac de culture de plantes par un vernis de plastisol.
